# FASCICULE DE BREVET EUROPEEN

(11) **EP 1 299 252 B1**
(45) Date de publication et mention de la délivrance du brevet: **30.06.2004**
(21) Numéro de dépôt: 01984225.1
(22) Date de dépôt: 06.07.2001
(51) Int. Cl.: B60B 27/00

(54) **PALIER A ROULEMENT, NOTAMMENT POUR ROUES NON MOTRICES DE VEHICULE AUTOMOBILE**
WÄLZLAGER, INSBESONDERE FÜR NICHTANGETRIEBENES RAD EINES MOTORFAHRZEUGES
ROLLER BEARING, IN PARTICULAR FOR MOTOR VEHICLE NON-DRIVING WHEEL

(30) Priorité: 13.07.2000 FR 0009176
(43) Date de publication de la demande: 09.04.2003
(73) Titulaire: SNR ROULEMENTS, 74010 Annecy Cédex (FR)
(72) Inventeur: CARTIER, Michel, F-74410 Saint Jorioz (FR)
(74) Mandataire: Srour, Elie
(86) Numéro de dépôt international: PCT/FR2001/002177
(87) Numéro de publication internationale: WO 2002/006064

(56) Documents cités:
- EP-A- 0 475 792
- EP-A- 0 498 299
- EP-A- 0 568 958
- DE-A- 4 006 463
- DE-A- 4 417 421
- FR-A- 2 717 266

## Description

La présente invention concerne les paliers à roulement, notamment les paliers à roulement à billes, ou autres corps roulants, pour roues non motrices de véhicules automobiles.

Elle concerne plus particulièrement les paliers à roulement comportant deux rangées de billes, ou d'autres corps roulants tels que par exemple des rouleaux coniques. Par la suite, pour simplifier l'expression, on utilisera essentiellement le terme "bille", étant entendu que, sauf indication contraire, cela devra être compris comme désignant tout corps roulant utilisable dans des roulements à deux rangées de corps roulants.

Dans des paliers à roulements de type connu, les bagues intérieures des roulements sont montées sur un arbre ou une fusée de roue, fixe en rotation, et les chemins de roulement extérieurs sont réalisés directement dans le moyeu de roue, qui constitue alors la bague extérieure du roulement. Chaque bague intérieure porte alors une piste de roulement intérieure pour une des deux rangées de billes. L'assemblage et le maintien sont obtenus par serrage axial des deux bagues intérieures l'une contre l'autre, couramment au moyen d'un écrou vissé sur le dit arbre ou la dite fusée.

Le document FR-A-2717266, qui sert de base pour la présentation en deux parties de la revendication 1, montre un tel montage, dans lequel un arbre fixe est monté dans un alésage d'un support fixe et porte les deux bagues intérieures du roulement. La bague extérieure, dans laquelle les pistes de roulement extérieures sont réalisées, constitue un moyeu d'une roue et porte un flasque pourvu d'une pluralité de trous aptes à recevoir des boulons de fixation d'un disque de frein et d'une jante. Un écrou vissé sur l'extrémité de l'arbre est en appui direct sur une des bagues intérieures et la presse contre l'autre bague intérieure, laquelle est elle-même en butée axiale contre une face du support fixe. L'arbre étant maintenu axialement sur le support fixe par un épaulement situé à son extrémité opposée à celle qui porte l'écrou, le serrage de l'écrou assure donc la mise en pression des deux bagues intérieures du roulement l'une contre l'autre. Le jeu de fonctionnement du roulement, et l'angle de contact des corps roulants dépendent donc du serrage de l'écrou, qui est effectué au moment de l'assemblage du moyeu sur l'arbre de roue. Les performances du roulement sont donc dépendantes des conditions de montage sur la ligne de fabrication du constructeur du véhicule, et sont donc susceptibles de varier d'un palier à l'autre de manière non contrôlée. Un desserrage de l'écrou en fonctionnement est également possible et influençant ainsi les performances, voire une dégradation très rapide de celles-ci.

Le document EP 0343058 décrit un montage de roulement similaire, à la différence près que le montage de l'arbre est inversé, c'est à dire que c'est un épaulement d'extrémité axiale de l'arbre qui est en appui axial direct contre la bague intérieure du roulement, et l'écrou est serré, à l'autre extrémité de l'arbre, contre une face du support fixe traversé par le dit arbre. Dans ce cas aussi, l'intensité du serrage de l'écrou peut influer sur les contraintes subies par le roulement et donc sur ses performances.

Pour éviter ces problèmes, il a déjà été proposé ce qu'il est connu d'appeler sous la désignation de roulements prêts à l'emploi. Dans de tels roulements, les conditions de jeux et d'angles de contact des corps roulants sont déterminées au moment de leur fabrication, ne nécessitant plus d'écrou à serrer et régler au moment du montage, le roulement étant déjà réglé pour fonctionner de manière optimale à la sortie de la ligne de fabrication, et ce réglage n'étant pas influencé par les conditions de montage sur le véhicule.

Un tel montage est par exemple connu par le document EP-0475792. Dans le montage décrit dans ce document, une des pistes de roulement intérieures est formée directement sur le moyeu, qui porte par ailleurs une bague rapportée portant la deuxième piste de roulement intérieure. L'assemblage est réalisé par une collerette, formée par déformation plastique sur le moyeu après assemblage des bagues et des rangées de billes du roulement. Cette collerette, après qu'elle soit formée par refoulement du métal du moyeu, présente une face de rétention, appliquée en pression sur une face externe de la bague intérieure, de manière à immobiliser axialement la dite bague, en poussée axiale contre un épaulement d'une portée du moyeu constituant la deuxième piste de roulement intérieure pour la deuxième rangée de billes.

Un ensemble de roulement de ce type est donc réalisé dés sa fabrication avec le jeu axial, ou la pré-charge, nécessaire à son application ultérieure. Une fois la collerette formée, l'ensemble est prêt à l'emploi, puisque la bague intérieure rapportée est axialement maintenue par la collerette.

Dans les systèmes du type qui vient d'être décrit se pose toujours le problème d'éviter que des efforts trop importants exercés par la collerette de maintien sur la bague intérieure, lors de la réalisation de la dite collerette ou ultérieurement en cours d'utilisation, viennent détériorer la dite bague, ou au moins la déformer.

Un des objectifs de la présente invention est donc de fournir un roulement dont les performances sont garanties dès la sortie de sa ligne de fabrication, et non plus lors de son montage sur la ligne du constructeur du véhicule.

Un autre objectif est de limiter les sollicitations sur la collerette afin de garantir en fonctionnement un bon maintien des divers éléments constitutifs du montage.

Un autre objectif encore est de limiter les efforts supportés par cette collerette en cours d'utilisation, pour pouvoir en réduire les dimensions, et en conséquence réduire la quantité de matière et son poids, et réduire aussi les efforts à exercer pour refouler la collerette suite à la diminution du volume de matière à refouler.

Ces différents objectifs sont donc visés tout en respectant le cahier des charges classique d'un roulement, en termes de capacité de charge, durée de vie, fiabilité, maîtrise des coûts et de la masse, etc.

Avec ces objectifs en vue, l'invention a pour objet un palier à roulement à deux rangées de corps roulants, notamment pour roue non motrice de véhicule automobile, le palier comportant un moyeu tournant constituant la bague extérieure de roulement, et un élément de fusée fixe sur lequel sont emmanchées les bagues intérieures de roulement en contact l'une avec l'autre, l'élément de fusée étant lié à un support fixe pourvu de moyens de fixation rigide sur le véhicule, caractérisé en ce que l'élément de fusée comporte à une extrémité dirigée vers l'extérieur un épaulement contre lequel une première bague intérieure de roulement est en butée axiale, le support fixe étant emmanché serré sur l'élément de fusée, en butée contre une deuxième bague intérieure de roulement, et maintenu axialement par une collerette formée par déformation plastique d'une extrémité intérieure de l'élément de fusée, opposée à l'extrémité extérieure.

La collerette est obtenue par une déformation plastique par refoulement radial centrifuge d'une partie d'extrémité annulaire de l'élément de fusée, après que l'on ait placé successivement sur le dit élément de fusée les deux bagues intérieures de roulement puis le support fixe. La collerette présente alors une face de rétention appliquée en pression sur une face frontale externe du dit support, de manière à immobiliser axialement les dites bagues internes en butée l'une contre l'autre et enserrées axialement ensemble entre, d'une part, l'épaulement d'extrémité extérieure de l'élément de fusée et, d'autre part, une face d'appui frontale interne du support fixe.

L'assemblage des différents éléments du palier est réalisé en ligne de fabrication, et il est définitif dés la réalisation de la collerette, les caractéristiques de fonctionnement du roulement étant figées à ce moment, et donc non susceptibles d'être modifiées lors du montage du palier sur le véhicule. En effet, le montage sur le véhicule est réalisé par des moyens de fixation rigide, tels que classiquement des vis, liant directement le support fixe du palier sur le véhicule, sans que le serrage de ces vis n'influe sur l'assemblage des éléments du pallier.

L'élément de fusée a une surface cylindrique externe servant de portée pour les bagues internes de roulement ainsi que de portée d'emmanchement dans le support fixe. Ces portées ont préférentiellement le même diamètre de sorte que la surface cylindrique de la fusée est continue sur toute la longueur, ce qui en simplifie la réalisation.

Les bagues intérieures de roulement sont préférentiellement montées sur la fusée avec un ajustement légèrement serré, par exemple de l'ordre de 10 à 30 µm, pour éviter ou au moins réduire le risque d'une éventuelle rotation sous charge des bagues par rapport à la fusée.

Par ailleurs la fusée est préférentiellement montée dans le support fixe avec un ajustement serré plus important, par exemple de l'ordre de 40 à 70 µm, pour assurer une liaison rigide entre fusée et support, non susceptible de désolidarisation même lors de fortes variations de charge.

Préférentiellement encore, l'élément de fusée a une forme générale tubulaire, permettant donc de réduire considérablement le poids de cette pièce par rapport à un arbre plein. Pour rigidifier le montage, la fusée comporte cependant dans son évidement un disque de renfort dans un plan orthogonal à l'axe, limitant d'éventuelles déformations de la fusée. Ce disque est préférentiellement situé au niveau de l'emmanchement de la fusée dans le support fixe. De la sorte, il contribue au renforcement de la rigidité de cet emmanchement et donc en particulier à la reprise du moment de flexion de la fusée.

Le fait de réaliser la collerette sur l'extrémité interne de la fusée, c'est à dire l'extrémité située vers l'intérieur du véhicule, donc loin des zones actives de roulement, évite de soumettre les bagues de roulement aux efforts importants et aux risques consécutifs de déformation que pourraient subir la bague intérieure de roulement la plus extrême axialement si la déformation plastique de la collerette était effectuée au niveau de cette bague.

Autrement dit, la réalisation de la collerette sur l'extrémité interne de la fusée, du côté du support fixe, conduit à appliquer ces efforts de déformation plastique de la fusée le plus loin possible de la piste de roulement des billes, sur une partie la plus massive possible, apte à mieux supporter des efforts importants sans déformations.

De plus, compte tenu de l'emmanchement serré de la fusée dans le support fixe, les efforts subis directement par la collerette sont moindres que si celle-ci était réalisée du côté des bagues de roulement. La collerette peut donc être relativement allégée, donc utilisant moins de matière et étant en conséquence plus facile à déformer plastiquement lors de sa réalisation.

On notera encore que, par rapport au document EP-0475792 précité, l'invention simplifie considérablement le montage et en réduit le coût, en utilisant comme fusée une pièce de géométrie très simple, de surface extérieure cylindrique continue, à la seule exception de l'épaulement d'extrémité, sur laquelle sont emmanchées les bagues de roulement et le support fixe qui lui-même comporte comme seules surfaces fonctionnelles un simple alésage de diamètre constant et ses deux faces frontales d'appui, en plus bien sûr des surfaces de liaison au véhicule. Contrairement à cela, le montage décrit dans le document précité implique en plus la réalisation d'une piste de roulement pour une rangée de billes et d'une portée et d'une face d'appui frontal spécifique pour la bague intérieure de la deuxième rangée de bille, directement sur la pièce de support, ce qui est plus compliqué et onéreux.

Selon d'autres caractéristiques de l'invention :
- un joint d'étanchéité est placé entre la bague intérieure de roulement située au contact du support fixe, et le bord du moyeu situé du côté du dit support, c'est à dire du côté interne du véhicule;
- un bouchon est emmanché dans l'alésage du moyeu du côté externe, de manière à assurer une parfaite étanchéité du roulement aux agressions de l'extérieur.

D'autres caractéristiques et avantages apparaîtront dans la description qui va être faite d'un palier à roulement à deux rangées de billes conforme à l'invention.

On se reportera aux dessins annexés dans lesquels :
- la figure 1 est une vue en perspective d'un palier conforme à l'invention, pour une roue non motrice d'un véhicule automobile de tourisme ;
- la figure 2 est une vue en coupe axiale du palier de la figure 1.

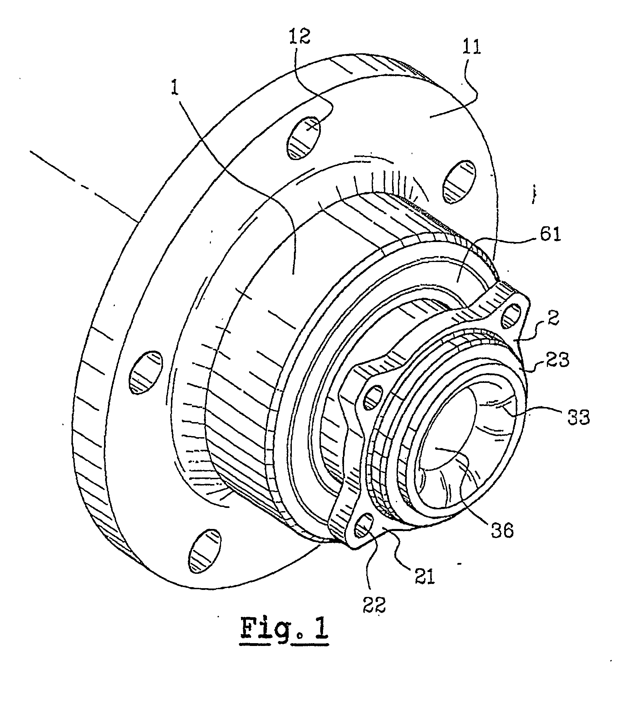

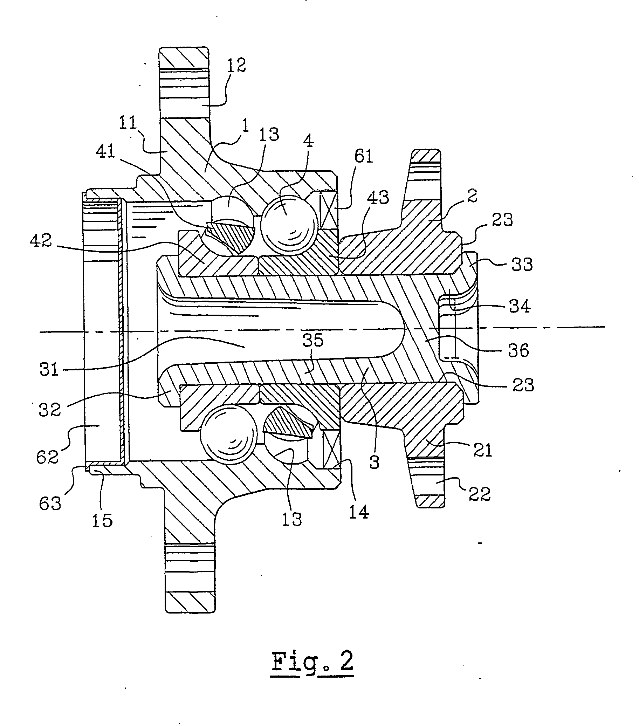

Le palier illustré sur les dessins des figures 1 et 2 comporte un moyeu 1 tournant par rapport à un support fixe 2.

Le moyeu 1 comporte un flasque 11 conçu de manière à recevoir un disque de frein et la jante de la roue, non représentés, qui peuvent être fixés sur le dit flasque par des vis ou boulons passant dans les trous de fixation 12 circonférentiellement répartis. Le moyeu 1 comporte un alésage dans lequel sont réalisés deux chemins de roulement 13 pour deux rangées respectives de corps roulants tels que des billes 4, positionnées dans une cage 41 assurant l'équidistance entre les dites billes, de manière connue en soi, pour constituer un roulement à deux rangées de billes à contact oblique.

Chaque rangée de billes roule par ailleurs sur une piste de roulement intérieure réalisée sur une bague intérieure respective. La géométrie des billes, chemins de roulement du moyeu et bagues intérieures, est telle que les deux bagues intérieures 42, 43 sont en butée axiale l'une contre l'autre lorsqu'elles sont assemblées avec les deux rangées de billes situées dans leurs chemins de roulement respectifs.

Les deux bagues intérieures 42, 43 sont emmanchées avec un ajustement légèrement serré, par exemple de 10 à 30 µm, sur une fusée 3 comportant un évidement 31, et en butée axiale contre un épaulement 32 d'extrémité externe de la fusée.

Le support fixe 2 comporte également un flasque 21 comportant une pluralité de trous de-fixation 22 répartis pour assurer sa fixation par vis ou boulons sur un élément de suspension du véhicule par exemple.

La fusée 3 passe dans un alésage 23 du support, avec un ajustement serré, par exemple de 40 à 70 µm. Le support 2 est serré en butée axiale contre la bague intérieure 43 de roulement par une collerette 33 réalisée par déformation plastique de l'extrémité de la fusée opposée à celle portant l'épaulement.

La collerette 33 est réalisée par refoulement à froid de la matière d'une extrémité annulaire 34 de la fusée contre la face frontale 23 du support située du côté interne du véhicule.

Entre cette extrémité annulaire 34 et la portion annulaire 35 de fusée entourant l'évidement 31 et servant de portée pour les bagues intérieures 42, 43, la fusée comporte un disque 36' s'étendant dans un plan orthogonal sensiblement au niveau du flasque 21. L'épaisseur du disque 36 étant variable d'un type de montage à un autre pour être adaptée aux efforts exercés sur le roulement.

Un joint d'étanchéité, par exemple un joint à lèvres 61 de type connu est inséré dans une gorge 14 usinée sur le bord de l'alésage du moyeu, et porte sur la partie de plus grand diamètre de la bague intérieure 43. De l'autre côté du moyeu, un bouchon 62, par exemple en matière plastique, et en forme de cuvette, est inséré dans l'alésage, le bord 63 de la cuvette butant contre la face frontale externe 15 du moyeu.

L'invention n'est pas limitée au mode de réalisation illustré dans l'exemple décrit ci-dessus. En particulier, les billes pourront être remplacées par d'autres corps roulants, tels que par exemple des rouleaux coniques. Les formes et dispositions relatives des flasques pourront aussi être modifiées, pour les adapter aux pièces qui doivent y être fixées ou sur lesquelles ils doivent être fixés, et aux moyens de fixation utilisés.

## Revendications

1. Palier à roulement à deux rangées de corps roulants (4), notamment pour roue non motrice de véhicule automobile, le palier comportant un moyeu tournant (1) constituant la bague extérieure de roulement, et un élément de fusée (3) fixe sur lequel sont emmanchées les bagues intérieures (42, 43) de roulement en contact l'une avec l'autre, l'élément de fusée (3) étant lié à un support fixe (2) pourvu de moyens (22) de fixation rigide sur le véhicule, **caractérisé en ce que** l'élément de fusée (3) comporte à une extrémité extérieure un épaulement (32) contre lequel une première bague intérieure de roulement est en butée axiale, le support fixe étant emmanché serré sur l'élément de fusée, en butée contre une deuxième bague intérieure de roulement, et maintenu axialement par une collerette (33) formée par déformation plastique d'une extrémité intérieure (34) de l'élément de fusée, opposée à l'extrémité extérieure.

2. Palier à roulement selon la revendication 1, **caractérisé en ce que** l'extrémité intérieure (34) de l'élément de fusée est annulaire, et la collerette est formée par refoulement radial centrifuge pour présenter une face de rétention appliquée en pression sur une face frontale externe (23) du support fixe (2).

3. Palier à roulement selon la revendication 1, **caractérisé en ce que** l'élément de fusée (3) a une surface cylindrique externe continue sur toute sa longueur pour servir de portée pour les bagues intérieures (42, 43) et pour le support fixe (2).

4. Palier à roulement selon la revendication 3, **caractérisé en ce que** les bagues intérieures (42, 43) sont montées sur la fusée (3) avec un ajustement légèrement serré, de l'ordre de 10 à 30 µm.

5. Palier à roulement selon les revendications 3 ou 4, **caractérisé en ce que** la fusée (3) est montée dans le support fixe (2) avec un ajustement serré de l'ordre de 40 à 70 µm.

6. Palier à roulement selon la revendication 1, **caractérisé en ce que** l'élément de fusée (3) a une forme générale tubulaire présentant un évidemment (31).

7. Palier à roulement selon la revendication 6, **caractérisé en ce que** la fusée comporte dans son évidement (31) un disque de renfort (36) dans un plan orthogonal à l'axe.

8. Palier à roulement selon la revendication 7, **caractérisé en ce que** le disque (36) est situé au niveau de l'emmanchement de la fusée (3) dans le support fixe (2).

9. Palier à roulement selon la revendication 1, **caractérisé en ce que** un joint d'étanchéité (61) est placé entre la bague intérieure (43) de roulement située au contact du support fixe (2) et le bord du moyeu (1) situé du côté du dit support.

10. Palier à roulement selon la revendication 1, **caractérisé en ce que** un bouchon (62) est emmanché dans l'alésage du moyeu (1) du côté externe.

## Patentansprüche

1. Wälzlager mit zwei Reihen von Rollkörpern (4), insbesondere für ein nicht-angetriebenes Rad eines Kraftfahrzeugs, wobei das Lager eine drehende Nabe (1) aufweist, welche den äußeren Ring des Lagers bildet, und ein festes Spindelelement (3), auf welchem die inneren Ringe (42, 43) des Lagers in Kontakt untereinander aufgepresst sind, wobei das Spindelelement (3) mit einem festen Träger (2) verbunden ist, der mit starren Befestigungsmitteln (22) an dem Fahrzeug versehen ist, **dadurch gekennzeichnet, dass** das Spindelelement (3) an einem äußeren Ende eine Schulter (32) aufweist, gegen welche ein erster innerer Lagerring in axialem Anschlag ist, wobei der feste Träger auf dem Spindelelement aufgepresst eingespannt ist, in Anschlag gegen einen zweiten inneren Lagerring, und axial durch einen Kragen (33) gehalten wird, welcher durch plastische Verformung eines inneren Endes (34) des Spindelelements gegenüberliegend zum äußeren Ende gebildet ist.

2. Wälzlager gemäß Anspruch 1, **dadurch gekennzeichnet, dass** das innere Ende (34) des Spindelements ringförmig ist und der Kragen durch radiale Fliehkraft-Stauchung gebildet ist, um eine Rückhaltefläche aufzuweisen, welche in Druck auf einer frontalen äußeren Fläche (23) des festen Trägers (2) angelegt ist.

3. Wälzlager gemäß Anspruch 1, **dadurch gekennzeichnet, dass** das Spindelelement (3) eine zylindrische äußere Oberfläche aufweist, welche über ihre gesamte Länge kontinuierlich ist, um als Sitz für die inneren Ringe (42, 43) und für den festen Träger (2) zu dienen.

4. Wälzlager gemäß Anspruch 3, **dadurch gekennzeichnet, dass** die inneren Ringe (42, 43) auf der Spindel (3) mit einer leicht gepressten Passung in der Größenordnung von 10 bis 30 µm montiert sind.

5. Wälzlager gemäß Anspruch 3 oder 4, **dadurch gekennzeichnet, dass** die Spindel (3) in dem festen Träger (2) mit einer in der Größenordnung von 40 bis 70 µm gepressten Passung montiert ist.

6. Wälzlager gemäß Anspruch 1, **dadurch gekennzeichnet, dass** das Spindelelement (3) eine im Allgemeinen röhrenförmige Form aufweist, welche eine Vertiefung (31) aufweist.

7. Wälzlager gemäß Anspruch 6, **dadurch gekennzeichnet, dass** die Spindel in ihrer Vertiefung (31) eine Verstärkungsscheibe (36) in einer zu der Achse orthogonalen Ebene aufweist.

8. Wälzlager gemäß Anspruch 7, **dadurch gekennzeichnet, dass** die Scheibe (36) auf Höhe der Aufpressung der Spindel (3) in dem festen Träger (2) angeordnet ist.

9. Wälzlager gemäß Anspruch 1, **dadurch gekennzeichnet, dass** eine Dichtung (61) zwischen dem inneren Ring (43) des Lagers, welcher in Kontakt mit dem festen Träger (2) angeordnet ist, und dem Rand der Nabe (1), welcher auf der Seite des Trägers angeordnet ist, eingesetzt ist.

10. Wälzlager gemäß Anspruch 1, **dadurch gekennzeichnet, dass** ein Deckel (62) in die Öffnung der Nabe (1) auf der äußeren Seite eingepresst ist.

## Claims

1. A rolling bearing assembly with two rows of rolling bodies (4), in particular for a non-driving wheel of a motor vehicle, the bearing assembly comprising a rotary hub (1) constituting the outer bearing race, and a fixed stub axle element (3) on which the inner bearing races (42, 43) are fitted in mutual contact, the stub axle element (3) being connected to a fixed support (2) provided with means (22) for rigid fixing to the vehicle, **characterised in that** the stub axle element (3) at an outer end comprises a shoulder (32) against which a first inner bearing race is in a condition of axial abutment, the fixed support being fitted clamped on the stub axle element in a condition of abutment against a second inner bearing race and held in place axially by a collar portion (33) formed by plastic deformation of an inner end (34) of the stub axle element opposite to the outer end.

2. A rolling bearing assembly according to claim 1 **characterised in that** the inner end (34) of the stub axle element is annular and the collar portion is formed by centrifugal radial upsetting to present a retaining face applied in pressure relationship against an external front face (23) of the fixed support (2).

3. A rolling bearing assembly according to claim 1 **characterised in that** the stub axle element (3) has an external cylindrical surface which is continuous over its entire length to serve as a bearing surface for the inner races (42, 43) and for the fixed support (2).

4. A rolling bearing assembly according to claim 3 **characterised in that** the inner races (42, 43) are mounted on the stub axle (3) with a slightly clamped adjustment of the order of 10 to 30 µm.

5. A rolling bearing assembly according to claims 3 or 4 **characterised in that** the stub axle (3) is mounted in the fixed support (2) with a clamped adjustment of the order of 40 to 70 µm.

6. A rolling bearing assembly according to claim 1 **characterised in that** the stub axle element (3) is of a general tubular shape with an opening (31).

7. A rolling bearing assembly according to claim 6 **characterised in that** the stub axle in its opening (31) comprises a reinforcing disc (36) in a plane in orthogonal relationship with the axis.

8. A rolling bearing assembly according to claim 7 **characterised in that** the disc (36) is disposed at the location at which the stub axis (3) is fitted in the fixed support (2).

9. A rolling bearing assembly according to claim 1 **characterised in that** a seal (61) is positioned between the inner bearing race (43) disposed in contact with the fixed support (2) and the edge of the hub (1) which is disposed at the side of said support.

10. A rolling bearing assembly according to claim 1 **characterised in that** a plug (62) is fitted into the bore in the hub (1) on the outward side.
